# FASCICULE DE BREVET EUROPEEN

(11) **EP 2 450 233 B1**
(45) Date de publication et mention de la délivrance du brevet: **24.04.2013**
(21) Numéro de dépôt: 10447030.7
(22) Date de dépôt: 03.11.2010
(51) Int. Cl.: B60P 3/39

(54) **Lit(s) relevable(s) et superposable(s) faisant partie intégrante d'un véhicule de camping adapté**
Hochklappbare(s), übereinander positionierbare(s) Bett(en), das/die Bestandteil eines entsprechend adaptierten Camping-Fahrzeugs ist/sind
Adjustable and stackable bed(s) which are an integral part of an adapted camping vehicle

(43) Date de publication de la demande: 09.05.2012
(73) Titulaire: Goethals, Roland, 4520 Wanze (BE)
(72) Inventeur: Goethals, Roland, 4520 Wanze (BE)

(56) Documents cités:
- WO-A1-2005/023058
- DE-U1- 20 316 034
- DE-U1-202004 008 740
- FR-A3- 2 482 536

## Description

### Domaine de l'invention

La présente invention concerne un véhicule de camping adapté et comportant un ou plusieurs lits relevables et rangeables sous le plafond de manière à libérer de la place utilisable à d'autres fonctions,améliorer l'agencement et augmenter le volume de rangement. Un exemple de cette technique antérieur est divulgué par le document DE 203/603441.

Dans le domaine des véhicules de camping on connaît l'attachement des fabricants pour les lits relevables et on rencontre actuellement des dispositifs pour le relevage d'un seul lit au moyen de barres articulées fonctionant manuellement ou électriquement, il manque actuellement la possibilité de superposer deux ou trois lits relevables et il n'existe aucun dispositif de relevage qui puisse suivre l'inclinaison des parois des véhicules de camping.

### Résumé de l'invention

La présente invention a pour but de créer des véhicules de camping comportant un ou plusieurs lits superposés et relevables et avec la possibilité dans certains cas d'évoluer en suivant l'inclinaison de la paroi si celle-ci est inclinée.Les avantages obtenus grâce à cette invention sont multiples, d'abord un gain d'encombrement, pouvoir utiliser la place libérée sous le ou les lits pour d'autres fonctions, améliorer la circulation à bord durant le jour, réduire le gabarit des véhicules de camping et augmenter le volume exploitable à l'intérieur.

### Brève description des dessins

La figure 1 représente en perspective une vue partielle d'un véhicule de camping équipé de deux lits longitudinaux superposés en position d'utilisation.
La figure 2 représente partiellement un lit articulé transversal en position haute.
La figure 3 représente partiellement un lit articulé transversal en début de descente.
La figure 4 représente partiellement un lit articulé transversal avant la fin de course vers le bas.
La figure 5 représente partiellement un lit articulé transversal en en position d'utilisation et en bas.
La figure 6 représente partiellement deux lits articulés superposés en position haute et transversalement.
La figure 7 représente partiellement deux lits articulés transversaux superposés en début de descente.
La figure 8 représente partiellement deux lits articulés transversaux superposés à l'approche de la fin de course vers le bas.
La figure 9 représente partiellement un lit déverrouillé et avec sa béquille dépliée.
La figure 10 représente partiellement un lit relevé et verrouillé au plafond et avec sa béquille repliée.
La figure 11 est une vue de profil et partielle d'un lit relevé à mi-course et avec le moteur situé hors de la zone du lit relevable.
La figure 12 est une vue en plan et partielle d'un lit relevé à mi-course et avec le moteur situé hors de la zone du lit relevable.

### Description de l'invention

L'invention est exposée ci-après à l'aide des dessins pour plusieurs modes d'exécution.

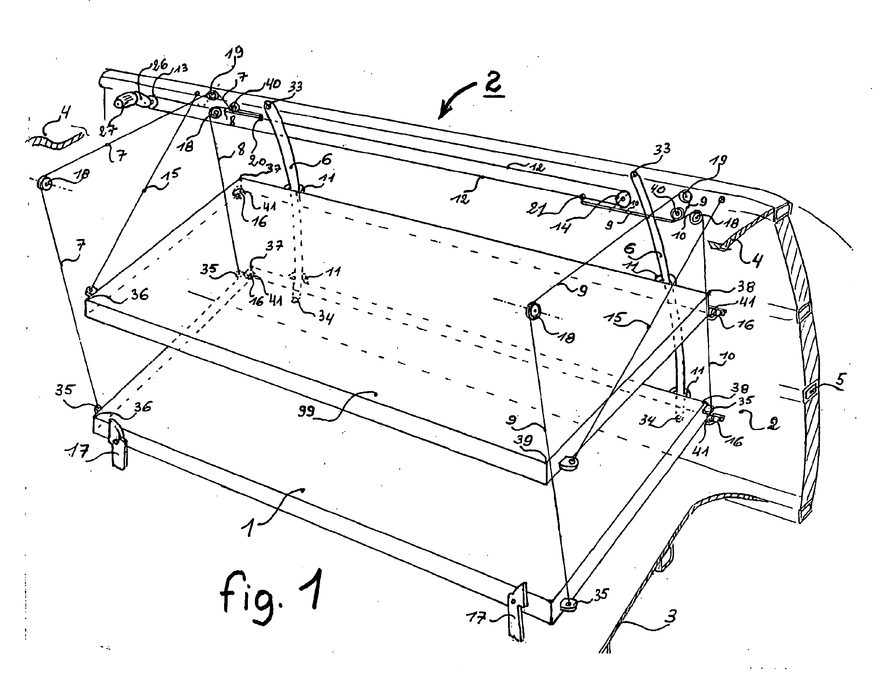

La figure 1 représente deux lits 1 et 99 superposés et en position d'utilisation dans un véhicule de camping 2. Le lit 1 du bas est posé sur deux béquilles repliables 17 fixées aux coins 36 et 39 et dont leur extrémité est en contact avec le plancher 3,à chaque coin opposé 37 et 38 est fixé un taquet 41 lui-même posé sur une butée fixe 16 solidaire de la paroi 5 et le long côté reliant les coins 37 et 38 est proche et parallèle à la paroi 5 ou deux guides coulissants 11 sont solidaires et proche l'un du coin 37 et l'autre du coin 38, ces deux guides coulissants 11 enserrent librement deux guides fixes 6 situé entre le lit 1 et la paroi 5 et fixés d'une part en bas à l'aide d'une attache 34 et en haut à l'aide d'une attache 33, l'attache 34 étant fixée à la jonction entre le plancher 3 et la paroi 5, l'attache 33 étant fixée à la jonction entre le plafond 4 et la paroi 5. Un câble métallique souple 7 est relié à une attache 35 fixée au coin 36 du lit 1, un câble 8 est relié à une attache 35 fixée au coin 37, un câble 9 est relié à une attache 35 fixée au coin 39 et un câble 10 est relié à une attache 35 fixée au coin 38. Les câbles 7 et 9 évoluent chacun identiquement au départ de leur attache 35 vers le haut pour s'enrouler autour d'une poulie 18 fixée au plafond 4 approximativement à l'aplomb des coins respectifs 36 et 39, ensuite ces câbles 7 et 9 evoluent horizontalement sous le plafond 4 vers la paroi 5 où ils s'enroulent chacun autour d'une poulie 19 fixée au plafond 4 respectivement presque à l'aplomb des coins 37 et 38 et ensuite ces câbles 7 et 9 évoluent chacun vers une poulie double 40 proche et fixée à la paroi 5 et finalement ces câbles 7 et 9 terminent leur parcours en se fixant à une attache 20 pour le câble 7 et à une attache 21 pour le câble 9, l'attache 20 est solidaire du brin supérieur d'une chaîne à maillons 12 et l'attache 21 est solidaire du brin inférieur de la chaîne 12 laquelle évolue le long de la paroi 5 et horizontalement sous le plafond 4 et que les deux brins de la chaîne 12 sont superposés verticalement par rapport au plancher 3 et que vers l'extrémité correspondante au coin 38 une roue dentée libre 14 fixée à la paroi 5 et autour de laquelle la chaîne 12 s'enroule et qu'ensuite les deux brins de la chaîne 12 évoluent l'un vers une roue dentée 13 fixée en bout d'axe d'un démultiplicateur de vitesse 26 solidaire d'un moteur 27 fixé à la paroi 5 à l'autre extrémité du lit 1 près du coin 37 et que l'autre brin évolue en sens inverse et vers la roue dentée 14 et la chaîne 12 forme une boucle fermée. Le câble 8 est fixé par une attache 35 elle-même fixée au coin 37 du lit 1 et le câble 10 est fixé par une attache 35 elle-même fixée au coin 38 du lit 1.Les câbles 8 et 10 évoluent chacun identiquement vers le haut pour s'enrouler autour d'une poulie 18 fixée au plafond 4 approximativement à l'aplomb des coins respectifs 37 et 38, ensuite les deux câbles 8 et 10 évoluent chacun vers une poulie à double gorges 40 proche et fixée à la paroi 5 et que cette poulie 40 est commune pour les câbles 7 et 8 d'une part et une autre poulie commune 40 pour les câbles 9 et 10 et correspondante au côté opposé.Lorsque le lit 1 n'est pas utilisé on le relève à l'aide du moteur électrique 27 capable de tourner en un sens et en sens inverse.Le lit 1 étant en position basse il faut actionner le moteur 27 de façon à déplacer le brin supérieur avec l'attache de liaison 20 de la chaîne 12 dans le sens opposé au moteur 27 et vers la roue dentée 14 et de manière à ce que le brin inférieur de la chaîne 12 avec l'attache de liaison 21 se déplace en sens inverse et l'ensemble des quatre câbles 7, 8, 9 et 10 sont mis en mouvement et en même temps ,sont tendus et entraînent le lit 1 vers le haut en restant continuellement parallèle au plancher 3 et que le lit 1 est guidé par deux guides coulissants 11 coulissant autour de deux guides fixes 6 solidaires de la paroi 5 et si cette paroi 5 est inclinée, ce qui est le cas des fourgons aménagés, les guides fixes 6 suivent cette inclinaison ainsi que le lit 1 et à mi-hauteur entre le plancher 3 et le plafond 4,le dessus du lit 1 entre en contact avec le dessous du lit 99 et le soulève en l'entraînant vers le plafond 4, le lit 99 étant guidé par deux guides coulissants 11 fixés au lit 99 coulissant autour des deux guides fixes 6.

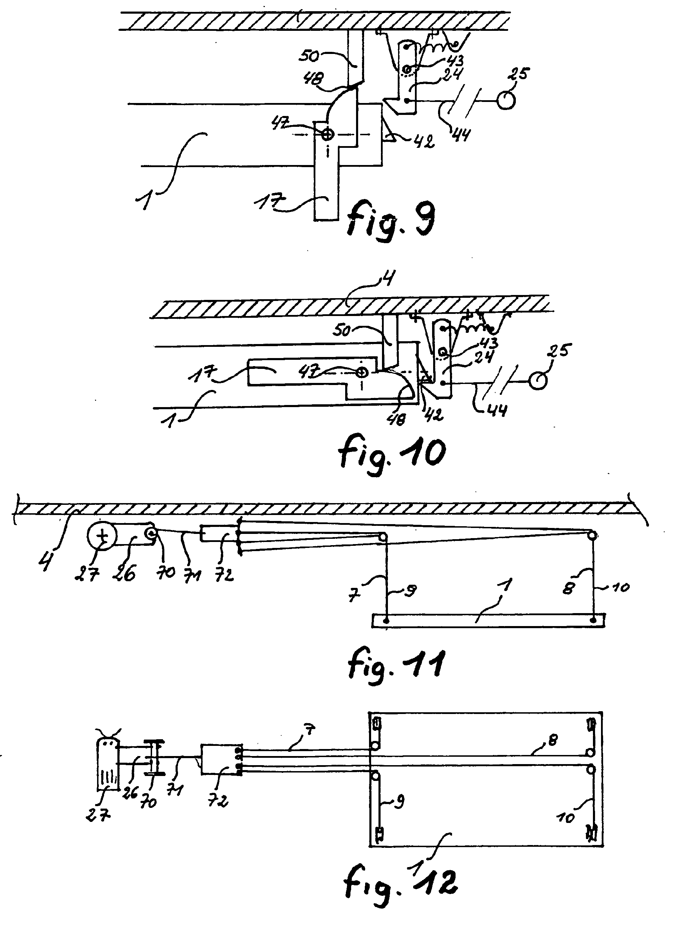

Sur la figure 9 on peut voir un lit 1 peu avant sa fin de course vers le haut et qu'une butée 50 fixée au plafond 4 vient en contact avec un prolongement de la béquille 17 présentant une surface d'appui 48 décalée par rapport à l'axe 47 de la béquille 17 et par rapport à un plan vertical transversal passant par l'axe 47, la surface d'appui 48 glisse contre la butée 50 et de ce fait la béquille 17 s'articule autour de l'axe 47 fixé au côté du lit 1 vers une de ses extrémités pour se positionner et se ranger à l'horizontale le long du côté du lit 1 en fin de course et une autre béquille 17 est située à l'autre extrémité. Toujours suivant la figure 9 on peut voir que le lit 1 est prolongé d'une butée 42 à l'une de ses extrémités et présentant une surface d'appui inclinée contre laquelle vient glisser la tête d'un cliquet de verrouillage 24 lequel s'articule autour de l'axe 43 fixé à un support fixé au plafond 4 et qu'en fin de course du lit 1 vers le plafond 4, le cliquet 24 vient s'enclencher sous la butée 42 et le lit 1 est maintenu rangé sous le plafond en sachant qu'un même dispositif avec cliquet 24 est situé à l'autre extrémité du lit 1. Un ressort de rappel maintient les cliquets 24 verrouillés. Un câble 44 fixé à la tête de chacun des cliquets et reliés entre eux par une poignée 25 permet le déverrouillage des cliquets 24 en tirant sur la poignée 25.Dans le cas de lits superposés la butée 50 et le support de cliquet 24 est rallongé en fonction de l'épaisseur nécessaire pour le ou les lits intercalés entre le lit 1 et le plafond 4.

En s'aidant de la figure 1 on peut remarquer que lorsque le lit 1 est descendu à mi-hauteur,deux taquets 41 fixés au long côté du lit 99 positionnés avec un décalage par rapport aux taquets 41 du lit 1, ces taquets 41 du lit 99 entrent en contact avec deux butées 16 fixées à la paroi 5 et en même temps deux moyens de liaison 15 formés d'une chaîne à maillons ou de barres articulées fixés d'une part aux extrémités du lit 99 et du côté éloigné de la paroi 5 et fixés d'autre part à la jonction entre le plafond 4 et la paroi 5 et que les moyens de liaison 15 et les taquets 41 assurent le maintien à l'horizontale et à la hauteur voulue du lit 99 et ensuite le lit 1 descend seul et que les deux béquilles 17 déployées vers le bas assurent le maintien du lit 1 sur le plancher 3 et en même temps les deux taquets 41 se posent sur les deux butées 16 correspondantes et à la hauteur voulue. Les guides fixes 6 peuvent également être inclinés vers la gauche ou vers la droite dans le sens longitudinal en plus de l'inclinaison transversale liée à la paroi 5, les guides fixes 6 suivent alors une double inclinaison.

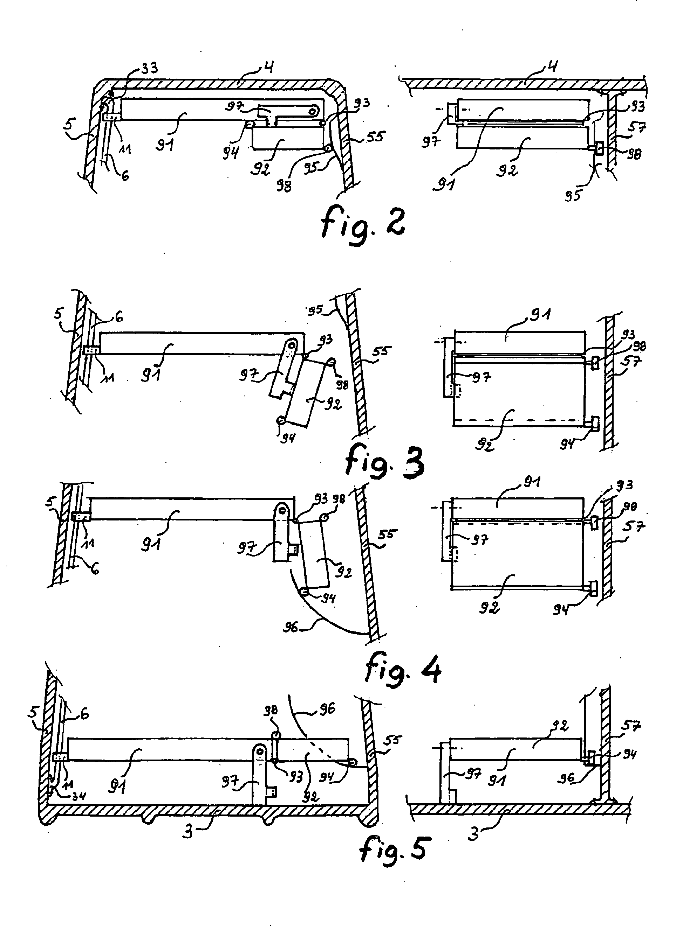

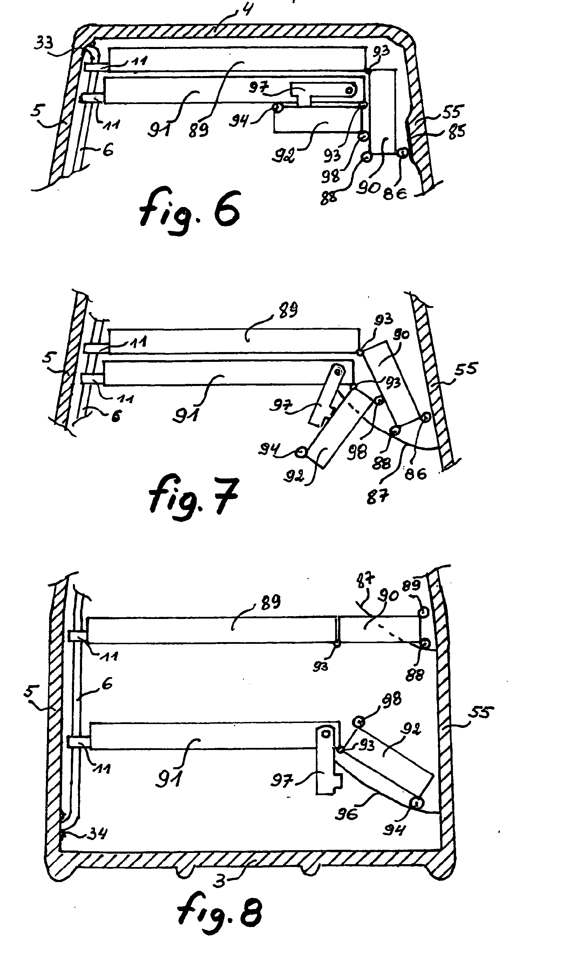

Un deuxième mode d'exécution en s'aidant des figures 2, 3, 4 et 5 et en se remémorisant la figure 1 est décrit et concerne le positionnement d'un lit 91 posé transversalement par rapport à la paroi 5. Dans ce cas , et surtout si le véhicule de camping 2 est un fourgon aménagé,la largeur disponible sous le plafond 4 est inférieure à la largeur au niveau du plancher 3. Dans ce cas le lit 91 est composé d'une partie principale 91 prolongé d'un surcroît de lit 92 articulé à l'aide d'une charnière 93 reliant les deux parties 91 et 92 et cette charnière 93 se trouve à la partie inférieure. Pour ce mode d'exécution un panneau 57 est fixé transversalement par rapport à la paroi 5 et verticalement par rapport au plancher 3 et sur ce panneau 57 et sous le plafond 4 se fixe l'ensemble moteur 27, réducteur de vitesse 26, roue dentée 13, roue libre 14, butées 16et poulies 40. Ce panneau 57 peut être découpé pour assurer un passage de la cabine vers vers la zone camping. Les guides fixes 6 sont fixés à la paroi 5 et les guides mobiles 11 sont fixés sur le petit côté du lit 91 et proche de la paroi 5. Les moyens de liaison 15 aboutissent à la jonction entre le plafond 4 et la paroi 5 d'une part et à la jonction entre le plafond 4 et la paroi 55. Un cliquet 24 est positionné contre la paroi 5 et en bout du lit 91 et deux autres cliquets 24 sont fixés au plafond 4 l'un d'un côté du lit 91 et l'autre de l'autre côté du lit 91 et vers la paroi 55.La figure 3 montre le lit 91 avec son surcroît de lit 92 dans la phase descendante ou l'on s'aperçoit que le surcroît de lit 92 se présente vers le bas et qu'il est muni d'une roulette 94 située à l'angle opposé à la charnière 93 et sous le surcroît de lit 92.La figure 4 montre le lit 91 et son surcroît de lit 92 en phase d'approche du plancher 3 et que la roulette 94 rencontre une surface d'appui 96 en arc de cercle dirigé vers le bas et vers la paroi 55 et qu'arrivé en fin de course la figure 5 montre alors que la roulette 94 a positionné le surcroît de lit 92 dans le prolongement du lit 91 pour ne former qu'un seul lit et que la béquille 97 vient prendre appui sur le plancher 3. Lorsque le lit 91 remonte vers le plafond 4 la roulette 94 fait le chemin inverse et le surcroît de lit 92 reprend sa position vers le bas. Une roulette 98 est fixée au dessus du surcroît de lit 92 et à l'angle opposé proche de la charnière 93 et au fur et à mesure de la montée, cette roulette 98 se rapproche de la paroi 55 pour entrer en contact avec une surface d'appui 95 solidaire de la paroi 55 et la figure 2 montre qu'en fin de course vers le plafond 4, la roulette 98 en appui sur la surface d'appui 95 a fait s'articuler le surcroît de lit 92 qui se retrouve rangé sous le lit 91 et en même temps le pied de la béquille 97 est en appui contre le dessous du surcroît de lit 92 et est également rangé le long du lit 91 et sous le plafond 4. Un autre mode d'exécution est décrit en s'aidant des figures 6, 7 et 8 et en se remémorisant les figures 1, 2, 3, 4 et 5 et concerne deux lits 91 et 89 articulés et superposés et positionnés transversalement par rapport à la paroi 5. La figure 7 montre un lit 89 avec son surcroît de lit 90 posé sur un lit 91 avec son surcroît de lit 92 et en phase descendante peu avant la mi-hauteur et l'on peut apercevoir qu'une roulette 88 fixée sous le surcroît de lit 90 et à l'extrémité éloignée de la charnière 93 roule contre une surface d'appui 87 en forme d'arc de cercle dirigé vers le bas et vers la paroi 55 et en même temps une roulette 98 fixée au dessus du surcroît de lit 92 est en appui contre le dessous du surcroît de lit 90 et que le pied de la béquille 97 est en appui contre le dessous du surcroît de lit 90. La figure 8 montre le lit 89 et son surcroît de lit 90 en position d'utilisation et l'on aperçoit que la roulette 88 est en fin de course à la jonction de la paroi 55 avec la surface d'appui 87. Le lit 91 est proche de du plancher 3. La figure 6 montre le rangement horizontal contre le plafond 4 des deux lits 89 et 91 et que le surcroît de lit 90 est rangé verticalement à l'aide d'une roulette 86 fixée à son extrémité et en appui contre une surface d'appui 85 solidaire de la paroi 55 et qu'en même temps une roulette 98 fixée au dessus du surcroît de lit 92 et du côté de la charnière 93 prend appui contre le dessous du surcroît de lit 90 et positionne le surcroît de lit 92 à l'horizontale et sous le le lit 91 et en même temps le pied de la béquille 97 est également rangé à l'horizontale en appui contre le dessous du surcroît de lit 92.

En s'aidant des figures 11 et 11 et 12 une variante d'exécution est décrite. L'emplacement du moteur 27 est positionné hors de la zone ou évolue le ou les lits et le pignon 13 est remplacé par un tambour enrouleur 70 autour duquel s'enroule un câble 71 au bout duquel est fixé une liaison 72 où se fixent les quatre câbles 7, 8, 9 et 10 . L'emplacement ou évolue le câble 71 est variable , soit au plafond 4 ou contre la paroi 5 et de manière parallèle au plafond 4 ou de manière verticale le long de la paroi 5 et dans le cas ou le câble 71 évolue verticalement le long de la paroi 5 l'emplacement peut être dans la zone ou évolue le ou les lits. Des poulies suplémentaires 18 seront fixées soit au plafond 4 ou contre la paroi 5 pour assurer le circuit complémentaire nécessaire à la liaison avec les poulies 18 ou 19 du circuit prévu selon la première description. Les poulies 40 sont supprimées. Tous les éléments et tous les fonctionnements communs à l'une ou à l'autre des variantes d'exécution décrites ci-avant et selon la présente invention n'ont pas été répétés,il suffit de se reporter à l'une ou à l'autre de ces exécutions.

Ceci termine la description générale relative à la présente invention.

## Revendications

1. Véhicule de camping (2) **caractérisé en ce qu'**il comporte un lit relevable(1) situé lorsqu'il est en position d'utilisation de manière à ce qu'il soit parallèle au plancher (3) et que l'un des longs côtés du dit lit (1) compris entre les coins (37) et (38) soit proche de la paroi (5) et parallèle à la paroi (5) et en sachant que la dite paroi (5) est reliée longitudinalement au plancher (3) à sa partie inférieure et reliée longitudinalement au plafond (4) à sa partie supérieure et que par rapport au dit plancher (3) la dite paroi (5) s'incurve transversalement et vers l'intérieur et en suivant le galbe du véhicule de camping (2) et que le dit lit (1) comporte un petit côté délimité par un coin (36) opposé au coin (37) et que l'autre petit côté à l'autre extrémité du lit (1) est délimité par le coin (39) opposé au coin (38) et que les coins (36) et (39) délimitent le grand côté éloigné de la paroi (5) et que le dit lit (1) est posé en son coin (39) sur une béquille articulée (17) elle même posée sur le plancher (3) et une autre béquille (17) supporte également le dit lit (1) en son coin (36) et qu'un taquet (41) fixé au coin (38) est posé sur une butée (16) fixée à la paroi (5) et que de même un autre taquet (41) du coin (37) est également posé sur une butée (16) fixée à la paroi (5) et que le dit lit (1) est relevable à l'aide d'un moteur électrique (27) fixé à la paroi (5) à une extrémité du dit lit (1) et que le dit moteur (27) peut tourner dans les deux sens de rotation et est muni d'un démultiplicateur de vitesse (26) au bout de l'axe duquel est fixé un pignon denté (13) entrainant durant sa rotation une chaîne métallique à maillons (12) évoluant parallèlement au plancher (3) et parallèlement à la paroi (5) jusque sensiblement et à proximité de l'autre extrémité du dit lit (1) où une roue dentée libre (14) fixée à la paroi (5) renvoie après enroulement partiel la chaîne (12) vers le moteur (27) fermant ainsi une boucle continue et que la dite chaîne (12) comporte une attache de liaison (20) fixée sur le brin supérieur de la chaîne (12) et que cette attache (20) maintien fixement deux câbles métalliques souples (7) et (8) et que le dit câble (7) évolue horizontalement vers une poulie commune (40) fixée à la paroi (5) pour ensuite évoluer vers une poulie proche (19) fixée au plafond (4) et évoluer ensuite vers une poulie (18) fixée au plafond (4) et descendre ensuite vers le plancher (3) et se fixer à une attache (35) fixée au coin (36) du dit lit (1) et que d'autre part le câble (8) également fixé à l'attache (20) évolue vers la poulie commune (40) et ensuite vers une poulie proche (18) fixée à la paroi (5) pour descendre vers le plancher (3) et se fixer à une attache (35) solidaire du coin (37) du dit lit (1) et qu'à l'autre extrémité du dit lit (1) une attache de liaison (21) solidaire du brin inférieur de la chaîne (12) où sont fixés deux câbles (9) et (10) lesquels câbles (9) et (10) évoluent semblablement aux câbles (7) et (8) mais à l'autre extrémité du dit lit (1) et à l'aide de poulies (40) (19) et (18) pour finalement se fixer respectivement aux coins (39) et (38) par l'aide de deux attaches (35) et qu'ensuite le moteur (27) fonctionne de manière à entraîner le brin supérieur de la chaîne (12) et de l'attache (20) dans le sens opposé au moteur (27) et qu'en même temps l'autre attache (21) du brin inférieur de la chaîne (12) se déplace en sens inverse et vers le moteur (27) entraînant simultanément et à la même vitesse les câbles (7) (8) (9) et (10) lesquels entraînent dans leurs courses les quatre attaches (35) des coins respectifs (36) (37) (39) et (38) et par l'intermédiaire de toutes les poulies (18) (19) et (40) situées aux deux extrémités du dit lit (1) et que la course des dits câbles (7) (8) (9) et (10) évolue vers le haut et vers le plafond (4) en soulevant le dit lit (1) de manière horizontale et parallèlement au plancher (3) jusqu'au bout de son ascension limitée par un contact électrique de coupure d'alimentation électrique disposé à cet effet et qu'ensuite en inversant le courant au moteur (27) tout l'ensemble fonctionne en sens inverse et le dit lit (1) redescend vers le plancher (3) et que le dit lit (1) est guidé en montée et en descente par deux guides coulissants (11) fixés sensiblement aux deux extrémités et sur le côté reliant les coins (37) et (38) et que les dits deux guides (11) coulissent librement autour de deux guides fixes (6) fixés chacun à leur extrémité inférieure à la liaison entre la paroi (5) et le plancher (3) par une attache (34) et que chacune des extrémités supérieure soit relié à une fixation (33) fixée à la jonction entre la paroi (5) et le plafond (4) et que si la paroi (5) n'est pas verticale par rapport au plancher (3) considérée dans le sens transversal et que cette paroi (5) s'incurve vers l'intérieur du véhicule de camping (2) et en suivant le galbe du véhicule de camping (2), les dits guides fixes (6) suivent la même inclinaison et le même galbe et lorsque le dit lit (1) arrive en fin de course sous le plafond (4) deux ou quatre taquets (42) répartis et fixés chacun d'eux aux extrémités du dit lit (1) et que ces taquets (42) en entrant en contact avec des cliquets (24)fixés au plafond (4)et articulés autour d'un axe (43) et que les taquets (42) repoussent les cliquets (24) pour qu'ensuite ces cliquets (24) s'enclenchent sous la surface d'appui des taquets (42) aidés en celà par des ressorts de rappel et que ces cliquets (24) sont reliés à des câbles (44) eux même reliés à une manette commune (25) pour permettre le désenclenchement des cliquets (24) et que lorsque la manette (25) est tirée les cliquets (24) libèrent le dit lit (1) et qu'avec l'aide du moteur (27) le dit lit (1) redescend vers le plancher (3) guidé par les deux guides mobiles (11) glissant autour de des guides fixes (6) respectifs et que le dit lit (1) comporte à chacune de ses extrémités délimitées par les coins (36) et (39) un axe (47) fixé au dit lit (1) et qu'autour de cet axe (47) s'articule une béquille (17) dirigée vers le bas et lorsque le dit lit (1) arrive en fin de course vers le plancher (3) les deux béquilles (17) correspondantes respectivement aux coins (36) et (39) prennent appui sur le plancher (3) et que d'autre part et en même temps deux taquets (41) fixés aux coins (37) et (38) du dit lit (1) viennent en contact contre deux butées de soutien (16) fixées à la paroi (5) et qu'ensuite après inversion du sens de rotation du moteur (27) le dit lit (1) remonte vers le plafond (4) et que les dites béquilles (17) comportent au delà de l'axe (47) un prolongement situé au delà à l'opposé du pied de la béquille (17) et présentant une surface d'appui (48) en forme d'arc de cercle et située de telle sorte qu'en fin de course vers le plafond (4) cette surface d'appui (48) entre en contact avec une butée fixe (50) solidaire du plafond (4) cette butée fixe (50) étant déportée par rapport à l'axe (47) et présentant une surface d'appui inclinée de manière à imprimer un mouvement de rotation à la béquille (17) autour de l'axe (47) et de manière à ce que le pied de la béquille (17) soit rangée parallèlement au dit lit (1) et parallèlement au plafond (4).

2. Véhicule de camping (2) selon la revendication 1 **caractérisé en ce que** le dit véhicule de camping (2) comporte un lit superposé (99) superposé au dessus du dit lit (1) de telle sorte que lorsque les dits lits (1) et (99) sont relevés au plafond (4) un espace destiné au dit lit (99) ait été prévu entre le plafond (4) et le dit lit (1) lequel soutient le dit lit (99) et que le dit lit (99) est semblable au dit lit (1) comporte deux guides mobiles (11) posés juste au dessus des guides mobiles (11) du dit lit (1) et que le dit lit (99) ne comporte aucune attache (35) et lorsque le dit lit (1) entame sa course descendante vers le plancher (3) guidé par les deux guides fixes (6) autour desquels coulissent les deux guides mobiles (11) et que d'autre part,par gravitation, le dit lit (99) reste posé sur le dit lit (1) et est lui aussi guidé par ses propres guides mobiles (11) coulissant autour des guides fixes (6) et que deux taquets (41) fixés au dit lit (99) aux coins (37) et (38) mais avec un déport par rapport aux taquets (41) du dit lit (1) de manière à permettre le passage libre aux deux taquets (41) du dit lit (1) étant donné que deux butées (16) fixées à la paroi (5) et déportées ont pour rôle l'arrêt de la course du dit lit (99) en butant contre les taquets (41) du dit lit (99) et à une hauteur déterminée par rapport au plancher (3) et que simultanément deux moyens de liaison (15) sous forme de barres articulées ou de chaînes à maillons ou une combinaison des deux, l'un moyen de liaison (15) reliant le coin (36) du dit lit (99) et l'autre moyen de liaison (15) reliant le coin (39) du dit lit (99) à la jonction entre le plafond (4) avec la paroi (5) et que ces dits moyens de liaison (15) soutiennent le dit lit (99) en même temps que les taquets (41) et de manière horizontale et parallèle au plancher (3) et à la hauteur déterminée et que le dit lit (1) inférieur est ensuite libre dans sa course descendante pour libérer l'espace entre les deux lits (99) et (1).

3. Véhicule de camping (2) selon les revendications 1 et 2 **caractérisé en ce que** le lit supérieur (99) en considérant sa longueur, déborde franchement soit à gauche ou soit à droite et par rapport au lit inférieur (1) et que les dits lits (99) et (1) sont de ce fait décalés l'un par rapport à l'autre et que les guides fixes (6) sont situés entre la partie non débordante du dit lit (99) et du dit lit (1) soit à l'extrémité de l'un et à l'extrémité opposée de l'autre '

4. Véhicule de camping (2) selon la revendication 1 **caractérisé en ce que** les deux guides fixes (6) considérés dans le sens longitudinal de la paroi (5) et du véhicule de camping (2) ne sont pas positionnés verticalement par rapport au plancher (3) mais qu'ils sont inclinés volontairement vers l'avant ou vers l'arrière du véhicule de camping (2) et que les guides fixes (6) adoptent de ce fait une double inclinaison combinée dans le sens longitudinal et dans le sens transversal et en suivant le galbe éventuel de la paroi (5).

5. Véhicule de camping (2) selon les revendications 1,2 et 4 **caractérisé en ce que** des lits superposés (99) et (1) évoluent dans leur course commune et ascensionnelle suivant des guides fixes (6) avec double inclinaison combinée dans le sens longitudinal et dans le sens transversal et en suivant le galbe éventuel de la paroi (5).

6. Véhicule de camping (2) selon les revendications 1 et 3 **caractérisé en ce que** des lits superposés (99) et (1) et étant décalés longitudinalement dans le sens de leur superposition évoluent dans leur course commune et ascentionnelle suivant des guides fixes (6) avec double inclinaison combi née dans le sens longitudinal et dans le sens transversal et en suivant le galbe de la paroi (5).

7. Véhicule de camping (2) selon la revendication 1 **caractérisé en ce que** l'ensemble d'un lit (1) équipé du moteur (27),de la démultiplcation (26),du pignon (13),de la chaîne (12),de la roue dentée (14),des attaches de liaison (20) (21),des poulies de renvoi (40) (18) (19) des câbles (7) (8) (9) et (10) effectue un demi tour,soit une rotation de 90° selon un plan horizontal et parallèle au plancher (3) et est disposé transversalement par rapport à la paroi (5) et que d'autre part un panneau (57) perpendiculaire et solidaire du plafond (4), perpendiculaire et solidaires des parois (5) et (55) et que le dit panneau (57) est destiné à recevoir dans sa partie supérieure et à proximité du plafond (4) les fixations du moteur (27),du démultiplicateur (26),du pignon (13),de la roue libre (14),des poulies (40) (18) et (19) et que d'autre part les deux guides fixes (6) sont fixés à leur base à la jonction du plancher (3) et de la paroi (5) et à leur sommet à la jonction entre le plafond (4) et la paroi (5) et que ces dits guides fixes (6) sont proches et suivent l'inclinaison et le galbe de la paroi (5) et situés en correspondance avec les coins (36) et (37) d'un petit côté du dit lit (1) et sont perpendiculaires au plancher (3) selon un plan vertical transversal par rapport au plancher (3) et qu'en même temps les deux guides mobiles (11) coulissants sont solidaires des coins respectifs (36) et (37).

8. Véhicule de camping (2) selon les revendications 1, 2 et 7 **caractérisé en ce qu'**il comporte un lit superposé (99) transversal par rapport à la paroi (5) et posé sur un dit lit (1) inférieur et que les deux guides mobiles (11) solidaires du lit (99) sont en correspondance avec les deux guides mobiles (11) du lit inférieur (1) et que les moyens de liaison (15) solidaires d'une part au lit (99) aux coins (36) et (39) et d'autre part et en haut respectivement aux jonctions entre le plafond (4) et les parois (5) pour l'un et (55) pour l'autre et que d'autre part un taquet (41) est fixé à proximité du coin (37) du lit (99) et un autre taquet (41) est fixé à proximité du coin (38) du lit (99) et qu'en correspondance avec les deux taquets (41) du lit (99) sont fixés deux butées (16) solidaires du panneau (57) et situées à une hauteur telle qu'il subsiste un espace utilisable entre les deux lits (1) et (99) lorsque ceux-ci sont en position basse et qu'il reste un espace utilisable entre le plafond (4) et le lit (99).

9. Véhicule de camping (2) selon les revendications 1 et 7 **caractérisé en ce qu'**il comporte un lit articulé (91) auquel est fixée une charnière (93) reliant à l'angle inférieur les coins (38) et (39) et que d'autre part la charnière (93) est fixée à l'angle inférieur d'un surcroît de lit (92) et de telle sorte que lorsque le surcroît de lit (92) est en position horizontale et parallèle au plancher (3) et dans le prolongement du dit lit (91), le dit lit (91) et le surcroît de lit (92) ne forment plus qu'un seul lit de plus grande longueur et que d'autre part le lit (91) quitte sa position d'utilisation pour remonter vers le plafond (4), le lit (91) et son surcroît de lit (92) se libèrent de leurs supports respectifs,sous l'effet de l'attraction terrestre, le surcroît de lit (92) s'articule autour de la charnière (93) en s'orientant vers le bas et que d'autre part une roulette (94) fixée sous le surcroît de lit (92) et à l'angle opposé à la charnière (93) et que cette roulette (94) se trouve à proximité du panneau (57) et que son axe est horizontal et perpendiculaire au panneau (57) et que lorsque le lit (91)redescend vers le plancher (3) la roulette (94) entre en contact avec une surface d'appui (96) courbée en arc de cercle dont le bas de la courbure est situé contre la paroi (55) et que la surface d'appui (96) entraîne la roulette (94) laquelle entraîne le surcroît de lit (92) en une rotation autour de la charnière (93) et qu'en fin de course le surcroît de lit (92) devient le prolongement du lit (91) et en position d'utilisation et que d'autre part une béquille (97) s'articulant autour d'un axe horizontal et parallèle à la paroi (55) et fixée au lit (91) et à proximité de la charnière (93) et que cette béquille (97) se présente verticalement au plancher (3) sur lequel elle prend appui et que d'autre part lorsque le lit (91) quitte sa position pour remonter vers le plafond (4), la roulette (94) en appui et en roulant contre la surface d'appui (96) fin finit par se libérer et le surcroît de lit (92) s'oriente vers le bas et la béquille (97) est également orientée vers le bas et que d'autre part une roulette (98) fixée au surcroiît de lit (92) à l'angle supérieur et vers le lit (91) et du côté du panneau (57) et dont l'axe est vertical par rapport au panneau (57) et parallèle au plancher (3) et que cette roulette (98) se rapproche de la paroi (55) au fur et à mesure que le lit (91) monte et que la paroi (55) comporte une surface d'appui (95) et que cette surface d'appui (95) entre en contact avec la roulette (98) laquelle entraîne le surcroît de lit (92) dans un mouvement de rotation pour se retrouver à l'horizontale et sous le lit (91) et que d'autre part l'extrémité de la béquille (97) en appui contre le surcroît de lit (92) est également entraîné et se retrouve rangée contre le lit (91) et parallèle au plafond (4).

10. Véhicule de camping (2) selon les revendications 1, 2, 7, 8 et 9 **caractérisé en ce qu'**un lit articulé (89) superpose et repose sur un lit (91) muni de son surcroît de lit (92) et que ce lit articulé (89) comporte également un surcroît de lit (90) sous lequel est fixée une roulette (88) située à l'angle opposé à la charnière (93) et proche du panneau (57) et que l'axe de la roulette (88) est parallèle à la paroi (55) et verticale au panneau (57) et que d'autre part lorsque le lit (91) surmonté du lit (89) évolue vers le bas la roulette (88) entre en contact avec une surface d'appui (87) en forme de quart de cercle dont le bas de la courbure est situé contre la paroi (55) et est solidaire de celle-ci et que cette surface d'appui (87) en étant en contact avec la roulette (88) qui est entrainée avec le surcroît de lit (90) pour se retrouver à 1 horizontale et dans le prolongement du lit (89) en fin de course et qu'en même temps un moyen de liaison (15) fixé au coin (36) du lit (89) relie celui-ci à l'angle de jonction entre la paroi (5) avec le plafond (4) et à proximité du panneau (57) et qu'un autre moyen de liaison (15) fixé au coin (39) du lit (89) est relié à la jonction entre le plafond (4) et la paroi (55) et à proximité du panneau (57) et qu'en même temps deux taquets (41) fixés aux extrémités du lit (89) et du côté du panneau (57) se posent sur deux butées (16) fixées au panneau (57) et que d'autre part le lit articulé (91) est libre dans sa course vers le bas et ensuite lorsque le lit (91) et son surcroît de lit (92) remonte vers le plafond (4) le dessus du lit (91) entre En contact avec le dessous du lit (89) celui-ci est soulevé et la roulette (88) roule contre la surface d'appui (87) pour se libérer de celle-ci et le surcroît de lit (90) se dirige vers le bas et que d'autre part le surcroît de lit (90) comporte à sa partie supérieure et à l'extrémité opposée au lit (89) une roulette (86) dont l'axe est parallèle à la paroi (55) et perpendiculaire au panneau (57) et proche du panneau (57) et que la paroi (55) comporte à sa partie supérieure une surface d'appui (85) sur laquelle la roulette (86) vient rouler et entraîner le surcroît de lit (90) dans une position verticale par rapport et vers le plancher (3) lorsque le lit (91) arrive en fin de course vers le haut et que d'autre part une roulette (98) fixée au surcroît de lit (92) du lit articulé (91) et dont l'axe est parallèle à la paroi (55) et perpendiculaire au panneau (57) et que cette roulette (98) prend appui contre le dessous du surcroît de lit (90) et que durant la course montante du lit (91) la roulette (98) entraîne le surcroît de lit (92) sous le lit (91) et qu'en même temps la béquille (97) se range horizontalement et contre le lit (91).

11. Véhicule de camping (2)selon les revendications 1, 4 et 7 **caractérisé en ce que** les guides fixes (6) sont fixés à la paroi (5) et suivent l'inclinaison et le galbe de la paroi (5) et ceci dans le sens transversal par rapport à la paroi (5) et par rapport au véhicule de camping (2) et que par rapport au sens longitudinal les deux guides fixes (6) sont inclinés vers l'avant ou vers l'arrière du véhicule de camping (2) et ont de ce fait une double obliquité par rapport au plancher (3) et par rapport à un plan vertical transversal à la paroi (5) et que le panneau (57) suive l'inclinaison liée au sens longitudinal et parallèlement aux guides fixes (6).

12. Véhicule de camping (2) selon les revendications 1, 2, 4, 5, 7, 8 et 11 **caractérisé en ce qu'**un lit (99) superpose un lit (1) et que leurs deux guides (6) suivent une double inclinaison transversale et longitudinale par rapport au plancher (3) et par rapport à un plan vertical au plancher (3) et transversal par rapport à la paroi (5).

13. Véhicule de camping (2) selon les revendications 1, 4, 7, 8 et 9 en ce qu'un lit articulé (91) et son surcroît de lit (92) sont relevables en étant guidéspar deux guides fixes (6) avec double inclinaison transversale et longitudinale par rapport au plancher (3) et par rapport à un plan vertical au plancher (3) et transversal par rapport à la paroi (5).

14. Véhicule de camping (2) selon les revendications 1, 2,5, 8, 10, 12 et 13 **caractérisé en ce qu'**un lit articulé (89) et son surcroît de lit (90) superpose un lit articulé (91) avec son surcroît de lit (92) sont guidés dans leur montée et leur descente par deux guides fixes (6) avec double inclinaison transversale et longitudinale par rapport au plancher (3) et par rapport à un plan vertical au plancher (3) et transversal par rapport à la paroi (5).

15. Véhicule de camping (2) selon les revendications 1, 4, 7 et 11 **caractérisé en ce que** deux lits (1) sont disposés côte à côte et contre le plafond (4) et transversalement par rapport à la paroi (5) et que quatre guides fixes (6) sont fixés à la paroi (6) et suivent l'inclinaison et le galbe de la paroi (5) et que les deux premiers correspondent à un des deux lits (1) et sont inclinés par rapport au plancher (3) dans le sens longitudinal par rapport à la paroi (5) et dans le sens tel que le bas des deux guides fixes (6) se retrouve vers ou sous le second lit (1) et qu'inversément le bas des deux autres guides fixes (6) ne descend que jusqu'à mi-hauteur entre le plafond (4) et le plancher (3) et que leur inclinaison est en sens inverse de l'inclinaison des deux autres guides fixes (6) et de telle sorte qu'à aucun moment les guides fixes (6) ne puissent se croiser et que d'autre part les deux lits (1) sont superposés ou presque lorsqu'ils sont descendus en position d'utilisation.

16. Véhicule de camping (2) selon les revendications 1, 4, 7, 9, 11 et 13 **caractérisé en ce que** deux lits articulés (91) prolongés de leur surcroît de lit (92) disposés transversalement par rapport à la paroi (5) sont rangés côte à côte contre le plafond (4) et que lorsqu'ils sont redescendus vers le plancher (3), l'un des deux évolue guidé par ses deux guides fixes (6) dans un sens oblique par rapport à un plan vertical transversal à la paroi (5) et qu'inversément l'autre lit articulé (91) muni de son surcroît de lit (92) évolue vers le bas guidé par deux guides fixes (6) obliques par rapport à un plan vertical transversal à la paroi (5) et inclinés en sens inverse de l'inclinaison des deux autres guides fixes (6) liés à l'autre lit (91) et que lorsque l'un des deux lits (91) arrive en position d'utilisation à mi hauteur entre le plafond (4) et le plancher (3) et que l'autre lit (91) termine sa course vers le bas, les deux lits (91) sont superposés ou presque superposés.

17. Véhicule de camping (2) selon les revendications 1, 2, 3, 4, 5, 6, 7, 8, 11, 12 et 15 **caractérisé en ce que** les parois (5) et (55) sont perpendiculaires au plancher (3).

18. Véhicule de camping (2) selon les revendications 1 à 17 **caractérisé en ce que** le moteur (27) soit disposé hors de la zone dévolue aux lits et qu'il soit fixé soit au plafond (4) soit fixé à la paroi (5) et qu'il comporte un réducteur de vitesse (26) à la sortie duquel est fixé un tambour enrouleur de câble (70) sur lequel s'enroule un câble métallique souple (71) dont l'extrémité comporte un moyen de fixation (72) auquel se fixent les câbles (7) (8) (9) et (10) et que des poulies (18) fixées au plafond (4) ou à la paroi (5) de manière à ce que les quatre câbles (7) (8) (9) et (10) se déplacent dans le même sens le long du plafond (4) ou le long de la paroi (5) lorsqu'ils soulèvent le ou les lits (1) ou (91) ou (89).

19. Véhicule de camping (2) selon les revendications 1 à 18 **caractérisé en ce que** des moyens différents peuvent être utilisés :
une courroie crantée peut remplacer la chaîne à maillons (12);
une manivelle peut remplacer le moteur (27);
des courroies peuvent remplacer les câbles (7) (8) (9) et (10) et dans ce cas avec l'utilisation de poulies adaptées,

20. Véhicule de camping (2) selon les revendications 1, 2, 3, 5, 6, 8, 10, 12, 14, 17, 18 et 19 **caractérisé en ce qu'**il comprenne au moins une superposition de trois lits (1) (99) (91) (89) soit dans le sens transversal ou longitudinal par rapport à la paroi (5).

## Claims

1. Camping vehicle (2) **characterised by** the fact that it contains a pull-out bed (1) situated when in use so that it is parallel to floor (3) and so that one of the long sides of bed (1) that fits in between corners (37) and (38) is close to wall (5) and parallel to wall (5) and knowing that said wall (5) is lengthwise connected to floor (3) to its lower part and lengthwise connected to ceiling (4) to its upper part and that in relation to floor (3) said wall (5) curves itself transversely towards the inside while following the outline of camping vehicle (2) and that said bed (1) contains a small side delimited by corner (36) opposed to the corner (37) and that the other small side at the other end of bed (1) is delimited by corner (39) opposite corner (38) and that corners (36) and (39) delimit the big side that is furthest away from wall (5) and that said bed (1) is placed in its corner (39) on an articulated crutch (17) itself placed on the floor (3) and another crutch (17) equally supports bed (1) in its corner (36) and a fastener (41) attached to corner (38) is placed on a buttress (16) attached to wall (5) and another fastener (41) from corner (37) is equally placed on a buttress (16) attached to wall (5) and that said bed (1) can be pulled up thanks to an electric motor (27) attached to wall (5) on one end of the bed (1) and that said motor (27) can turn in both rotating directions and is equipped with a high-speed reduction gearbox (26) at the end of whose axis is attached a dented cog (13) pulling out a metallic link chain (12) during its rotation and moving in parallel to floor (3) and in parallel to wall (5) until significantly close to the other end of said bed (1) where a dented and free wheel (14) attached to wall (5) is sent back after partial winding up of chain (12) towards motor (27) thus closing a continuous loop and that said chain (12) contains a fastener (20) attached to the higher end of chain (12) and that this fastener (20) fixedly maintains two metallic and flexible cables (7) and (8) and that said cable (7) moves horizontally towards a shared pulley (40) fixed to wall (5) to then move towards a closer pulley (19) fixed to ceiling (4) and then move towards pulley (18) fixed to ceiling (4) to descend towards floor (3) and attach itself onto fastener (35) attached to corner (36) of said bed (1) and on the other hand cable (8) also attached to fastener (20) moves towards shared pulley (40) and then towards closer pulley (18) attached to wall (5) to descend towards floor (3) and attach itself to fastener (35) joined to corner (37) of said bed (1) and that on the other end of said bed (1) a fastener (21) joined to the bottom part of chain (12) where two cables (9) and (10) are attached and progress similarly to cables (7) and (8) but at the other end of said bed (1) and with the help of pulleys (40) (19) and (18) to attach them respectively to corners (39) and (38) thanks to two fasteners (35) and that afterwards motor (27) drags the upper part of chain (12) and fastener (20) in the opposite direction of motor (27) and that at the same time the other fastener (21) of the bottom part of the chain (12) moves in the opposite direction towards motor (27) simultaneously moving cables (7) (8) (9) and (10) at the same speed and thus making them drag along the four fasteners (35) from their respective corners (36) (37) (39) and (38) and passing through all the pulleys (18) (19) and (40) situated at the two far ends of said bed (1) and the course of said cables (7) (8) (9) and (10) moves upwards and towards the wall (4) and by pulling said bed (1) horizontally and in parallel to the floor (3) until the end of its limited ascent thanks to an electric contact consisting of cutting the electric supply and afterwards changing the direction of the current for motor (27) the entire construction works in the opposite direction and said bed (1) descends again towards to floor (3) and said bed (1) is guided in its ascent and descent by two sliding guides (11) distinctly attached to the ends and on the side joining corners (37) and (38) and that said guides (11) slide freely around two fixed guides (6) each attached by their lower part to the joining between wall (5) and floor (3) by fastener (34) and that each of the upper ends is joined by a fastening (33) attached to the junction between wall (5) and ceiling (4) and if wall (5) is not vertical in relation to floor (3) considered in the transverse sense and that this wall (5) curves itself towards the inside of camping vehicle (2) and following the outline of camping vehicle (2) said fixed guides (6) follow the same slope and outline and when said bed (1) arrives at the end of its course under ceiling (4) two or four wedges (42) placed and attached to the ends of said bed (1) and that these wedges (42) coming into contact with wedges (24) attached to ceiling (4) and articulated around axis (43) and that wedges (42) push back wedges (24) so that wedges (24) are attached under the bearing surface of wedges (42) helped in this by return springs and that these wedges (24) are attached to cables (44) themselves connected to a shared throttle (25) to allow the unlocking of ratchet (24) and when throttle (25) is freed from ratchets (24) freeing said bed (1) and with the help of motor (27) said bed (1) descends once again towards floor (3) guided by two moving guides (11) sliding around fixed guides (6) respectively and that said bed (1) contains at each of its ends delimited by corners (36) and (39) an axis (47) attached to said bed (1) and around axis (47) crutch (17) articulates itself and is directed towards the bottom and when said bed (1) finally arrives at the end of its progression towards floor (3) the two crutches (17) corresponding respectively to corners (36) and (39) support themselves on the floor (3) and simultaneously two fasteners (41) attached to corners (37) and (38) of said bed (1) come in contact against two support buttresses (16) attached to wall (5) and afterwards after inverting the direction of motor (27) said bed (1) ascends towards ceiling (4) and said crutches (17) beyond axis (47) are prolonged at the opposite foot of crutch (17) and present a bearing surface (48) in the shape of an arc of a circle and situated so that at the end of its course towards ceiling (4) this support surface (48) comes into contact with a fixed buttress (50) joined to ceiling (4) this fixed buttress (50) being moved away from axis (47) and presenting an inclined support surface so that it may push crutch (17) to rotate around axis (47) and in such a fashion that crutch (17) is placed in parallel to said bed (1) and in parallel to ceiling (4).

2. Camping vehicle (2) according to claim 1 **characterised by** the fact that said camping vehicle (2) is equipped with a superimposed bed (99) superimposed over said bed (1) in such a way that when said beds (1) and (99) are hoisted towards the ceiling (4) a space destined for said bed (99) has been arranged between ceiling (4) and said bed (1) which supports bed (99) and bed (99) is similar to bed (1) containing two sliding guides (11) placed just over sliding guides (11) of said bed (1) and said bed (99) only contains one fastener (35) and when said bed (1) begins its descent towards the floor (3) guided by two fixed guides (6) around which slide the two sliding guides (11) and that, thanks to gravitation, said bed (99) remains placed on said bed (1) and is also guided by its own sliding guides (11) sliding around fixed guides (6) and that two fasteners (41) attached to said bed (99) to corners (37) and (38) but with an adjustment regarding fasteners (41) of said bed (1) so as to allow the free passage of fasteners (41) of said bed (1) since two buttresses (16) attached to wall (5) and adjusted so as to stop the course of said bed (99) by bumping into fasteners (41) of said bed (99) and a height determined in relation to the floor (3) and simultaneously two methods of joining (15) in the form of articulated bars or chains or a combination of both, one joining method (15) joining corner (36) of said bed (99) and the other joining method (15) joining corner (39) of said bed (99) to the junction between ceiling (4) with wall (5) and that said joining methods (15) support said bed (99) at the same time as fasteners (41) and in horizontal fashion and parallel to floor (3) and at the determined height and that said bed (1) is afterwards free in its descent to allow space between beds (99) and (1).

3. Camping vehicle (2) according to claims 1 and 2 **characterised by** the fact that its higher bed (99) due to its length, is too big, either on the left or on the right, compared to the lower bed (1) and the said beds (99) and (1) are thus not perfectly aligned and the fixed guides (6) are situated between the part that does not run over said bed (99) and of said bed (1) thus at the end of one and the opposite end of the other

4. Camping vehicle (2) according to claim 1 **characterised by** the fact that fixed guides (6) considered in the longitudinal sense of wall (5) and of camping vehicle (2) are not positioned vertically in relation to the floor (3) but are voluntarily inclined towards the front or back of the camping vehicle (2) and that fixed guides (6) thus adopt a double inclination and in the transversal sense and following the eventual outline of wall (5).

5. Camping vehicle (2) according to claims 1,2 and 4 **characterised by** the fact that its superimposed beds (99) and (1) evolve in their simultaneous ascent following fixed guides (6) with double inclination in the longitudinal and transversal sense and following the eventual outline of wall (5).

6. Camping vehicle (2) according to claims 1 and 3 **characterised by** the fact that its superimposed beds (99) and (1) being moved longitudinally in the direction of their superimposition evolve in their simultaneous ascent following fixed guides (6) with double inclination in the longitudinal and transversal sense and following the eventual outline of wall (5).

7. Camping vehicle (2) according to claim 1 **characterised by** the fact that its bed (1) equipped with motor (27) reduction gear-box (26),cog (13),chain (12),toothed wheel (14), fasteners (20) (21),return pulleys (40) (18) (19) cables (7)(8)(9)and(10) completes a half turn, a 90° rotation according to a horizontal plane and parallel to floor (3) and is transversally placed in relation to wall (5) and a panel (57) perpendicular to and joining ceiling (4), perpendicular to and joining ceilings (5) and (55) and said panel (57) is destined to receive in its upper part close to ceiling (4) the fastenings of motor (27), of the reduction gear-box (26), cog (13), free wheel (14), pulleys (40) (18) and (19) and the two fixed guides(6) are attached at their base at the junction of floor (3) and wall (5) and at their top at the junction between ceiling (4) and wall (5) and that said fixed guides (6) are close and follow the inclination and the outline of wall (5) and are situated in correspondence with corners (36) and (37) of a small side of said bed (1) and are perpendicular to floor (3) according to a vertical plane transversally in relation to floor (3) and at the same time two moving guides (11) sliding are joined to respective corners (36) and (37).

8. Camping vehicle (2) according to claims 1, 2 and 7 **characterised by** the fact that it is composed of a superimposed bed (99) transversally in relation to wall (5) and placed on said lower bed (1) and two mobile guides (11) joined to bed (99) are connected to two mobile guides (11) of lower bed (1) and the methods of joining (15) connected to bed (99) at corners (36) and (39) and respectively above the junctions between ceiling (4) and walls (5) for one and (55) for the other and a fastener (41) is fixed near corner (37) of bed (99) and another fastener (41) is fixed near corner (38) of bed (99) and in connection with two fasteners (41) of bed (99) are fixed two buttresses (16) joined to panel (57) and situated at a height that allows for a useable space between beds (1) and (99) when these are in lower position and there remains a useable space between ceiling (4) and bed (99).

9. Camping vehicle (2) according to claims 1 and 7 **characterised by** the fact that it contains an articulated bed (91) on which a hinge (93) is attached joining to its lower angle corners (38) and (39) and hinge (93) is attached to the lower angle of the extra bed (92) in such a way that the extra bed (92) is in a horizontal and parallel position in relation to the floor (3) and in the prolonging part of said bed (91), said bed (91) and the extra bed (92) form one longer bed, and bed (91) when not in use is once again placed towards the ceiling (4), the bed (91) and the extra bed (92) free themselves from their respective supports thanks to the laws of gravity and the extra bed (92) is articulated around hinge (93) by orienting itself downwards and a small wheel (94) fixed under the extra bed part (92) and at the opposite angle of the hinge (93) and the small wheel (94) is close to panel (57) its axis is horizontal and perpendicular to panel (57) and when bed (91) descends towards the floor (3) small wheel (94) comes into contact with bearing surface (96) curved in an arc of circle whose lower part is against the wall (55) and whose bearing surface (96) drags the small wheel (94) which in turn drags the extra bed part (92) in a rotation around hinge (93) and at the end of its course bed (92) ends up prolonging bed (91) and when in use a crutch (97) articulating itself around a horizontal axis and parallel to wall (55) and attached to bed (91) and close to hinge (93) and this crutch (97) places itself vertically to the floor (3) on which it supports itself and when bed (91) leaves its position to ascend towards ceiling (4), small wheel (94) rolling against the bearing surface (96) ends up freeing itself and the extra bed part (92) moves downwards and crutch (97) is equally oriented downwards and a small wheel (98) attached to the extra bed (92) at the higher angle and (30) towards bed (91) and on the side of panel (57) whose axis is vertical in relation to panel (57) and parallel to floor (3) and when small wheel (98) moves closer to wall (55) as bed (91) ascends and wall (55) contains a bearing surface (95) and when this bearing surface (95) comes into contact with small wheel (98) which drags the extra bed (92) in a rotating movement to find itself horizontally placed under bed (91) and the end of crutch (97) placed against the extra bed (92) is equally dragged along and finds itself placed near bed (91) and parallel to ceiling (4).

10. Camping vehicle (2) according to claims 1, 2, 7, 8 and 9 **characterised by** the fact that it contains an articulated bed (89) that is superimposed and rests on bed (91) equipped with its extra bed space (92) and that this articulated bed (89) also has extra bed space (90) under which is fixed a small wheel (88) situated at the opposite angle of hinge (93) and close to panel (57) and the axis of the small wheel (88) is parallel to wall (55) and vertical in relation to panel (57) and when the bed (91) topped by bed (89) moves towards the floor the small wheel (88) comes into contact with a bearing surface (87) in the form of a quarter of a circle whose bottom curve is situated against wall (55) and is joined to this wall and when bearing surface (87) by being in contact with small wheel (88) which is dragged along with the extra bed space (90) to find itself at a horizontal position and thus prolonging the bed (89) at the end of its course and being at the same time a method of joining (15) attached to corner (36) of bed (89) joining the latter to the angle where wall (5) and ceiling (4) meet and close to panel (57) and another method of joining (15) attached to corner (39) of bed (89) is connected to the junction between ceiling (4) and wall (55) and close to panel (57) and at the same time two fasteners (41) attached to the ends of bed (89) and on the side of panel (57) place themselves on two buttresses (16) attached to panel (57) and the articulated bed (91) is free in its descent and afterwards bed (91) and its extra bed space (92) ascend towards ceiling (4) the underside of the bed (91) comes into contact with the underside of bed (89) and the latter is raised, and the small wheel (88) rolls against bearing surface (87) to free itself from it and the extra bed space (90) to direct itself downwards and the extra bed space (90) contains high at the opposite end of the bed (89) a small wheel (86) whose axis is parallel to wall (55) and is perpendicular to panel (57) and close to panel (57) and wall (55) contains on its higher part a bearing surface (85) on which a small wheel (86) rolls itself and drags the extra bed space (90) in a vertical position in relation to the floor (3) when bed (91) arrives at the end of its ascent and small wheel (98) attached to extra bed space (92) of articulated bed (91) and whose axis is parallel to wall (55) and perpendicular to panel (57) and this small wheel (98) leans itself against the underside of the extra bed space (90) and during its ascent (91) small wheel (98) drags the extra bed (92) under bed (91) while crutch (97) places itself horizontally against bed (91).

11. Camping vehicle (2) according to claims 1, 4 and 7 **characterised by** the fact that its fixed guides (6) are attached to wall (5) and follow the inclination and outline of wall (5) transversally in relation to wall (5) and in relation to camping vehicle (2) longitudinally the two fixed guides (6) are inclined towards the front or the back of the camping vehicle (2) and thus are doubly slanted in relation to the floor (3) and in relation to a vertical plane that is transversal to wall (5) and that panel (57) follows the inclination tied in the longitudinal direction and parallel to fixed guides (6).

12. Camping vehicle (2) according to claims 1, 2, 4, 5, 7, 8 and 11 **characterised by** the fact that it contains a bed (99) superimposed on a bed (1) and their two guides (5) follow a double inclination, transversally and longitudinally in relation to floor (3) and in relation to a vertical plane of floor (3) and transversally in relation to wall (5).

13. Camping vehicle (2) according to claims 1, 4, 7, 8 and 9 **characterised by** the fact that it contains an articulated bed (91) and its excess bed (92) can be pulled up thanks to two fixed guides (6) in a double inclination, transversally and longitudinally in relation to floor (3) and in relation to a vertical plane of floor (3) and transversally in relation to wall (5).

14. Camping vehicle (2) according to claims 1, 2,5, 8, 10, 12 and 13 **characterised by** the fact that an articulated bed (89) and its excess bed (90) superimpose an articulated bed (91) with its excess bed (92) and both are guided in their ascent and descent by two fixed guides (6) in a double inclination, transversally and longitudinally in relation to floor (3) and in relation to a vertical plane of floor (3) and transversally in relation to wall (5).

15. Camping vehicle (2) according to claims 1, 4, 7 and 11 **characterised by** the fact that its two beds (1) are placed next to each other along ceiling (4) and transversally in relation to wall (5) and other fixed guides (6) are attached to wall (6) and follow the inclination and outline of wall (5) and the two first correspond to two beds (1) and are inclined in relation to floor (3) longitudinally in relation to wall (5) and in the right direction so that the bottom of the two fixed guides (6) finds itself where the second bed (1) is and inversely the bottom of the two other fixed guides (6) only descends midway between the ceiling (4) and floor (3) and their inclination is in the opposite direction of the inclination of the two other fixed guides (6) and in such a way that at any moment the fixed guides (6) cannot meet and in any case the two beds (1) are superimposed or almost superimposed when they are taken down and are in use.

16. Camping vehicle (2) according to claims 1, 4, 7, 9, 11 and 13 **characterised by** the fact that its two articulated beds (91) prolonged by their extra bed space (92) placed transversally in relation to wall (5) are placed next to each other against the ceiling (4) and when they are taken down towards the floor (3), one of the two moves guided by two fixed guides (6) in a slanted direction in relation to a vertical plane that is transversal to wall (5) and inversely the other articulated bed (91) equipped with the extra bed space (92) is guided downwards by two fixed guides (6) in an oblique direction in relation to a vertical plane that is transversal to wall (5) and inclined in the opposite direction as the two other fixed guides (6) attached to the other bed (91) and when one of the two beds (91) arrives at a position of use at mid-height between the ceiling (4) and the floor (3) and the other bed (91) finished its travel towards the bottom, the two beds (91) are superimposed or almost superimposed.

17. Camping vehicle (2) according to claims 1, 2, 3, 4, 5, 6, 7, 8, 11, 12 and 15 **characterised by** the fact that walls (5) and (55) are perpendicular to floor (3).

18. Camping vehicle (2) according to claims 1 to 17 **characterised by** its motor (27) which can be placed outside of the area being used for the beds and be it fixed either to the ceiling (4) or to wall (5) and it is equipped with a speed-shifter (26) at the exit of which is attached a cable reel (70) around which a supple metallic cable (71) is wrapped and whose end contains a method of fixation (72) to which (30) cables (7) (8) (9) and (10) are fixed and pulleys (18) attached to ceiling (4) or wall (5) in such a way that all four cables (7) (8) (9) and (10) move in the same direction along ceiling (4) or wall (5) when they pull out either bed (1) or (91) or (89).

19. Camping vehicle (2) according to claims 1 to 18 **characterised by** the various methods that can be used:
a conveyor belt can replace the chain link (12);
a manual handle can replace the motor (27);
straps can replace cables (7) (8) (9) and (10) and in this case with adapted pulleys.

20. Camping vehicle (2) according to claims 1, 2, 3, 5, 6, 8, 10, 12, 14, 17, 18 and 19 **characterised by** containing at least three superimposed beds (1) (99) (91) (89) either longitudinally or transversally placed in relation to wall (5).

## Patentansprüche

1. Ein Campingfahrzeug (2), das sich dadurch auszeichnet, dass es ein hochklappbares Bett umfasst (1), das so liegt, wenn es in der Gebrauchsposition ist, dass es parallel zum Boden (3) ist und dass eine der Längsseiten des besagten Bettes (1) zwischen den Ecken (37) und (38) liegt, also nahe der Wand (5) und parallel zur Wand (5), und wenn man weiß, dass die besagte Wand (5) in Längsrichtung mit dem Boden (3) in ihrem unteren Teil und in Längsrichtung mit der Decke (4) in ihrem oberen Teil verbunden ist und dass im Verhältnis zu der besagten Decke (3) die besagte Wand (5) sich quer und nach innen hin und indem sie der Rundung des Campingfahrzeugs folgt (2) krümmt, und dass das besagte Bett (1) eine kleine Seitenfläche umfasst, die von einer Ecke begrenzt wird (36) gegenüber der Ecke (37) und dass die andere kleine Seitenfläche am anderen Ende des Bettes (1) von der Ecke (39) gegenüber der Ecke (38) begrenzt wird und dass die Ecken (36) und (39) die große entfernte Ecke der Wand (5) begrenzen und dass das besagte Bett (1) in seiner Ecke (39) auf eine gelenkige Stütze (17) gelegt ist, die wiederum auf dem Boden (3) ruht, und eine andere Stütze (17) trägt ebenfalls das besagte Bett (1) in seiner Ecke (36) und dass ein Keil (41) der in der Ecke befestigt ist (38), auf ein Widerlager gelegt ist (16), das an der Wand befestigt ist (5) und dass ebenso ein weiteres Widerlager (41) der Ecke (37) ebenfalls auf ein Widerlager gelegt ist (16), das an der Wand (5) befestigt ist, und dass das besagte Bett (1) mit Hilfe eines Elektromotors hochklappbar ist (27) der an der Wand befestigt ist (5) an einem Ende des besagten Bettes (1) befestigt ist und dass der besagte Motor mit einem Untersetzungsgetriebe (26) ausgerüstet ist, am Ende dessen Achse ein Zahnrad (13) befestigt ist, das während seiner Drehung eine Metallgliederkette (12) antreibt, die sich parallel zu Decke (3) und parallel zur Wand (5) bis etwa und in die Nähe des anderen Endes des besagten Bettes (1) entwickelt, wo ein freies Zahnrad (14) das an der Wand (5) befestigt ist, nach teilweisem Einrollen die Kette (12) zum Motor (27) zurückschickt, wodurch sie auf diese Weise eine kontinuierliche Schleife schließt, und dass die besagte Kette (12) ein Verbindungselement (20) enthält, das auf dem oberen Draht der Kette (12) befestigt ist, und dass dieses Verbindungselement (20) zwei flexible Metallkabel (7) und (8) ortsfest hält und dass das besagte Kabel (7) sich horizontal in Richtung auf eine gemeinsame Scheibe (40) bewegt, die an der Wand (5) befestigt ist, um sich danach in Richtung auf eine nahe Scheibe (19) zu bewegen, die an der Decke (4) befestigt ist, und sich danach in Richtung auf eine Scheibe (18) zu bewegen, die an der Decke (4) befestigt ist, und danach zum Boden hinabzusteigen (3) und sich an einem Verbindungselement (35) zu befestigen, das an der Ecke (36) des besagten Bettes (1) befestigt ist und dass andererseits das Kabel (8), das ebenfalls am Verbindungselement (20) befestigt ist, sich in Richtung auf die gemeinsame Scheibe (40) und danach in Richtung auf eine nahe Scheibe (18) bewegt, die an der Wand (5) befestigt ist, um wieder zum Boden (3) hinabzusteigen und sich an einem Verbindungselement (35) zu befestigen, das mit der Ecke (37) des besagten Bettes (1) fest verbunden ist, und dass am anderen Ende des besagten Bettes (1) ein Verbindungselement (21), das mit dem unteren Draht der Kette (12) fest verbunden ist, an der zwei Kabel (9) und (10) befestigt sind; diese Kabel (9) und (10) bewegen sich ähnlich den Kabeln (7) und (8), aber am anderen Ende des besagten Bettes (1) und mit Hilfe von Scheiben (40), (19) und (18) um sich schließlich an den jeweiligen Ecken (39) und (38) mit Hilfe von zwei Verbindungselementen (35) zu befestigen, und dass danach der Motor (27) so arbeitet, dass er den oberen Draht der Kette (12) und des Verbindungselements (20) in der dem Motor entgegengesetzten Richtung (27) zieht und dass zur gleichen Zeit das andere Verbindungselement (21) des unteren Drahtes der Kette (12) sich in umgekehrter Richtung und zum Motor (27) hin verschiebt, wodurch es gleichzeitig und mit derselben Geschwindigkeit die Kabel (7) (8) (9) und (10) zieht, die in ihren Läufen die vier Verbindungselemente (35) der jeweiligen Ecken (36) (37) (39) und (38) ziehen und durch Vermittlung aller Scheiben (18) (19) und (40), die sich an den beiden Enden des besagten Bettes (1) befinden, und dass der Lauf der besagten Kabel (7) (8) (9) und (10) sich nach oben und zur Decke (4) hin bewegt, wobei sie das besagte Bett (1) waagerecht und parallel zum Boden (3) bis zum Ende seines Anstiegs anheben, der durch einen elektrischen Kontakt zur Stromunterbrechung begrenzt wird, der zu diesem Zwecke angebracht ist, und dass danach, indem man den Strom am Motor (27) umkehrt, die gesamte Baueinheit in umgekehrter Richtung arbeitet und das besagte Bett (1) wieder zum Boden (3) absinkt und dass das besagte Bett (1) beim Auf- und Abstieg von zwei gleitenden Führungen (11) geführt wird, die empfindlich an den beiden Enden und über die Seite befestigt sind, welche die Ecken (37) und (38) verbindet, und dass die besagten zwei Führungen (11) um zwei feste Führungen herum (6) frei gleiten, von denen jede an ihrem unteren Ende an der Verbindung zwischen der Wand (5) und dem Boden (3) durch ein Verbindungselement (34) befestigt ist und dass jedes der oberen Enden mit einer Befestigung (33) verbunden ist, die an der Verbindungsstelle zwischen der Wand (5) und der Decke (4) befestigt ist und dass, wenn die Wand (5) in Bezug auf den Boden (3) nicht senkrecht ist, in Querrichtung betrachtet, und dass diese Wand (5) sich zum Inneren des Campingfahrzeugs (2) krümmt und indem es der Rundung Campingfahrzeugs (2) folgt, folgen die besagten Führungen (6) derselben Neigung und derselben Rundung und wenn das besagte Bett (1) am Ende des Laufs unter der Decke (4) ankommt, zwei oder vier Keile (42), von denen jeder an den Enden des besagten Bettes (1) aufgeteilt und befestigt ist, und dass diese Keile (42), indem sie in Kontakt mit den Klinken (24) kommen, die an der Decke (4) befestigt sind, und um eine Achse (43) herum angeordnet sind und dass die Keile (42) die Klinken (24) zurückdrücken, damit danach diese Klinken (24) unter der Stützfläche der Keile (42) einrasten, wobei sie dabei von Rückholfedern unterstützt werden und dass diese Klinken (24) mit Kabeln (44) verbunden sind, die wiederum mit einem gemeinsamen Handgriff (25) verbunden sind, um das Einrasten der Keile zu erlauben (24) und dass, wenn der Handgriff (25) gezogen wird, die Klinken (24) das besagte Bett (1) freisetzen, und dass mit der Hilfe des Motors (27) das besagte Bett (1) wieder zum Boden (3) absinkt, von den zwei beweglichen Führungen (11) bewegt, die um die jeweiligen festen Führungen (6) herum gleiten, und dass das besagte Bett (1) an jedem seiner Enden, die von den Ecken (36) und (39) begrenzt ist, eine Achse (47) umfasst, die am besagten Bett (1) befestigt ist, und dass um diese Achse (47) herum eine Stütze (17) angeordnet ist, die nach unten gerichtet ist, und wenn das besagte Bett (1) am Ende des Laufs zum Boden (3) ankommt, die beiden entsprechenden Stützen (17) die jeweils den Ecken (36) und (39) entsprechen, auf dem Boden (3) Unterstützung nehmen und dass andererseits und zur selben Zeit zwei Keile (41), die an den Ecken (37) und (38) des besagten Bettes (1) befestigt sind, mit zwei Stützanschlägen (16) in Kontakt kommen, die an der Wand (5) befestigt sind, und dass danach nach Umkehrung der Drehrichtung des Motors (27) das besagte Bett (1) wieder zur Decke (4) ansteigt und dass die besagten Stützen (17) jenseits der Achse (47) eine Verlängerung umfassen, die jenseits des Fußes der Stütze (17) gelegen ist, und die eine Auflagefläche (48) in Form eines Kreisbogens darstellen und so angeordnet sind, dass am Ende des Laufs zur Decke (4) diese Auflagefläche (48) mit einem festen Widerlager (50) in Kontakt tritt, das mit der Decke (4) fest verbunden ist; dieses feste Widerlager (50) wird in Bezug zur Achse (47) seitlich verschoben und weist eine geneigte Auflagefläche auf, so dass es der Stütze eine Drehbewegung (17) um die Achse (47) herum verleiht und so der Fuß der Stütze (17) parallel zu besagtem Bett (1) und parallel zur Decke (4) angeordnet wird.

2. Ein Campingfahrzeug (2) nach Anspruch 1, das sich dadurch auszeichnet, dass das besagte Campingfahrzeug (2) ein Etagenbett (99) umfasst, das über das besagte Bett (1) derart übereinander gelegt ist, dass, wenn die besagten Betten (1) und (99) zur Decke (4) hochgehoben werden, ein für das besagte Bett (99) bestimmter Raum zwischen der Decke (4) vorgesehen wurde und das besagte Bett (1), welches das besagte Bett (99) unterstützt, und dass das besagte Bett (99), das dem besagten Bett (1) ähnlich ist, zwei bewegliche Führungen (11) umfasst, die direkt über den beweglichen Führungen (11) des besagten Bettes (1) angebracht sind, und dass das besagte Bett (99) kein Verbindungselement (35) umfasst, und wenn das besagte Bett (1) seinen absteigenden Lauf zum Boden (3) hin beginnt, geführt von den beiden ortsfesten Führungen (6), um die herum die beiden beweglichen Führungen (11) gleiten und dass andererseits das besagte Bett (99) durch Schwerkraft über dem besagten Bett (1) liegen bleibt und ebenfalls von seinen eigenen beweglichen Führungen (11) geführt wird, die um die ortsfesten Führungen (6) herum gleiten und dass zwei Keile (41) am besagten Bett (99) an den Ecken (37) und (38) befestigt sind, aber mit einem Versatz im Verhältnis zu den Keilen (41) des besagten Bettes (1), um den beiden Keilen (4.1) des besagten Bettes (1) den freien Durchgang zu erlauben, da zwei Anschläge (16), die an der Wand (5) befestigt und seitlich verschoben sind, das Anhalten des Laufs des besagten Bettes (99) als Aufgabe haben, indem sie gegen die Keile (41) des besagten Bettes (99) stoßen und in einer im Verhältnis zum Boden (3) festgelegten Höhe und dass gleichzeitig zwei Verbindungsmittel (15) in Form von gelenkigen Stangen oder von Gliederketten oder einer Kombination beider, das ein Verbindungselement (15), die die Ecke (36) des besagten Bettes (99) verbindet, und das andere Verbindungsmittel (15), das die Ecke (39) des besagten Bettes (99) mit der Verbindung zwischen der Decke (4) und der Wand (5) verbindet, und dass die besagten Verbindungsmittel (15) das besagte Bett (99) zur gleichen Zeit wie die Keile (41) und auf horizontale und zum Boden (3) parallele Art und in der festgelegten Höhe unterstützen und dass das besagte untere Bett (1) danach in seinem herabsteigenden Lauf frei ist, um den Raum zwischen den beiden Betten (99) und (1) freizumachen.

3. Ein Campingfahrzeug (2) nach den Ansprüchen 1 und 2, das sich dadurch auszeichnet, dass das obere Bett (99), wenn man seine Länge berücksichtigt, entweder nach links oder nach rechts und in Bezug auf das untere Bett (1) frei hinausragt und dass die besagten Betten (99) und (1) aufgrund dieser Tatsache eines im Verhältnis zum anderen verschoben werden und dass die ortsfesten Führungen (6) zwischen dem nicht überstehenden Teil des besagten Bettes (99) und des besagten Bettes (1) liegen, also am Ende des einen und am gegenüberliegenden Ende des anderen.

4. Ein Campingfahrzeug (2) nach dem Anspruch 1, das sich dadurch auszeichnet, dass die beiden ortsfesten Führungen (6), die in Längsrichtung der Wand (5) und des Campingfahrzeugs (2) betrachtet, werden, in Bezug auf den Boden (3) nicht senkrecht positioniert sind, sondern dass sie beabsichtigt nach vorne oder nach hinten im Campingfahrzeug (2) geneigt sind und dass die ortsfesten Führungen (6) aufgrund dieser Tatsache eine doppelte, kombinierte Neigung in Längs- und in Querrichtung annehmen, und indem sie der eventuellen Krümmung der Wand (5) folgen.

5. Ein Campingfahrzeug (2) nach den Ansprüchen 1,2 und 4, das sich dadurch auszeichnet, dass die Etagenbetten (99) und (1) sich in ihrem gemeinsamen und ansteigenden Lauf bewegen, wobei sie den ortsfesten Führungen (6) mit kombinierter doppelter Neigung in Längs- und in Querrichtung folgen und indem sie der eventuellen Krümmung der Wand (5) folgen.

6. Ein Campingfahrzeug (2) nach den Ansprüchen 1 und 3, das sich dadurch auszeichnet, dass die Etagenbetten (99) und (1) und die in der Richtung ihrer Überlagerung längs versetzt sind, sich in ihrem gemeinsamen und ansteigenden Lauf gemäß den ortsfesten Führungen bewegen (6), mit kombinierter doppelter Neigung in Längs- und in Querrichtung folgen und der Krümmung der Wand (5) folgen.

7. Ein Campingfahrzeug (2) nach dem Anspruch 1, das sich dadurch auszeichnet, das die Gesamtheit eines Bettes (1), das mit einem Motor (27), einer Untersetzung (26), einem Ritzel (13), einer Kette (12), einem Zahnrad (14), Verbindungselementen (20) (21), Umlenkscheiben (40) (18) (19) und Kabeln (7)(8)(9) und (10) ausgestattet ist, eine Wende ausführt, also eine Drehung von 90° nach einer Ebene, die waagerecht und parallel zum Boden (3) ist, und in Bezug zur Wand (5) quer angeordnet ist und dass andererseits eine Platte (57), die senkrecht zur Decke (4) und mit ihr fest verbunden ist, senkrecht zu den Wänden (5) und (55) und mit ihnen fest verbunden ist, und dass die besagte Platte (57) dazu bestimmt ist, in ihrem oberen Teil und in der Nähe der Decke (4) die Befestigungen des Motors (27),der Untersetzung (26), des Ritzels (13), dem Freilauf (14), den Scheiben (40) (18) aufzunehmen, und (19) und dass andererseits die beiden ortsfesten Führungen (6) an ihrer Basis an der Verbindungsstelle des Bodens (3) und der Wand (5) und an ihrem Gipfel an der Verbindungsstelle zwischen Decke (4) und Wand (5) befestigt sind, und dass diese besagten ortsfesten Führungen (6) nahe sind und der Neigung und der Krümmung der Wand (5) folgen und in Verbindung mit den Ecken (36) und (37) einer kleinen Seite des besagten Bettes (1) und senkrecht zum Boden (3) gelegen sind, nach einer Ebene, die in Bezug auf den Boden (3) senkrecht und quer ist, und dass zur selben Zeit die beiden gleitenden beweglichen Führungen (11) mit den jeweiligen Ecken (36) und (37) fest verbunden sind.

8. Ein Campingfahrzeug (2) nach den Ansprüchen 1, 2 und 7, das sich dadurch auszeichnet, dass es ein Etagenbett (99) umfasst, das in Bezug auf die Wand (5) quer ist und über ein besagtes unteres Bett (1) gelegt ist und dass die beiden beweglichen Führungen (11), die mit dem Bett (99) fest verbunden sind, mit den beiden beweglichen Führungen (11) des unteren Bettes (1) in Verbindung sind, und dass die Verbindungsmittel (15), die einerseits mit dem Bett (99) an den Ecken (36) und (39), und anderseits und oben jeweils mit den Verbindungsstellen zwischen der Decke (4) und den Wänden (5) für die eine und (55) für die andere fest verbunden sind und dass anderseits ein Keil (41) in der Nähe der Ecke (37) des Bettes (99) befestigt ist und ein weiterer Keil (41) in der Nähe der Ecke (38) des Bettes (99) befestigt ist und dass in Verbindung mit den beiden Keilen (41) des Bettes (99) zwei Anschläge (16) befestigt sind, die mit der Platte (57) fest verbunden sind, und die in einer derartigen Höhe gelegen sind, dass zwischen den beiden Betten (1) und (99) ein nutzbarer Raum bleibt, wenn diese in niedriger Position sind, und dass zwischen der Decke (4) und dem Bett (99) ein nutzbarer Raum bleibt.

9. Ein Campingfahrzeug (2) nach den Ansprüchen 1 und 7, das sich dadurch auszeichnet, dass es ein gelenkiges Bett umfasst (91), an dem ein Scharnier (93) befestigt ist, das den unteren Winkel der Ecken (38) und (39) verbindet und dass andererseits das Scharnier (93) am unteren Winkel eines Zuwachses des Bettes (92) befestigt ist, und zwar derart, dass, wenn der Zuwachs des Bettes (92) in waagerechter Position und parallel zum Boden (3) und in der Verlängerung des besagten Bettes (91) ist, das besagte Bett (91) und der Zuwachs des Bettes (92) nur mehr ein einziges Bett größerer Länge bilden und andererseits das Bett (91) seine Gebrauchsposition verlässt, um wieder zur Decke aufzusteigen (4), das Bett (91) und sein Bettzuwachs (92) sich unter der Wirkung der Erdanziehung von ihren jeweiligen Trägern befreien, der Bettzuwachs (92) sich um das Scharnier (93) herum anordnet, wobei er sich nach unten orientiert, und dass andererseits eine Transportrolle (94), die unter dem Bettzuwachs (92) und im Winkel gegenüber dem Scharnier (93) befestigt ist, und dass diese Transportrolle (94) sich in der Nähe der Platte (57) befindet und dass seine Achse waagerecht und senkrecht zur Platte (57) ist und dass, wenn das Bett (91) wieder zum Boden (3) absinkt, die Transportrolle (94) mit einer Auflagefläche (96) in Kontakt tritt, die im Kreisbogen gekrümmt ist, wobei der untere Teil der Krümmung gegen die Wand (55) gelegen ist und dass die Auflagefläche (96) die Transportrolle (94) antreibt, die wiederum den Bettzuwachs (92) in eine Drehung um das Scharnier (93) herum antreibt und dass am Ende des Laufs der Bettzuwachs (92) zur Verlängerung des Bettes (91) in der Gebrauchsposition wird und dass sich andererseits eine Stütze (97) um eine Achse anordnet, die waagerecht und parallel zur Wand (55) ist und die am Bett (91) und in der Nähe des Scharniers (93) befestigt ist, und dass diese Stütze (97) sich senkrecht zum Boden (3) präsentiert, auf den sie sich stützt und dass andererseits, wenn das Bett (91) seine Position verlässt, um wieder zur Decke (4) anzusteigen, die Transportrolle (94) in Unterstützung und indem sie gegen die Auflagefläche rollt (96), sich schließlich befreit und der Bettzuwachs (92) sich nach unten orientiert und die Stütze (97) ebenfalls nach unten gerichtet ist und dass andererseits eine Transportrolle (98) am Bettzuwachs (92) in einem Winkel von über 30° zum Bett (91) und an der Seite der Platte (57) befestigt ist, und deren Achse senkrecht ist, in Bezug auf die Platte (57), die senkrecht und parallel zum Boden (3) ist, und dass diese Transportrolle (98) sich der Wand (55) nähert, und zwar in dem Maße, in dem das Bett (91) ansteigt und dass die Wand (55) eine Auflagefläche (95) umfasst und dass diese Auflagefläche (95) in Kontakt mit der Transportrolle (98) tritt, die den Bettzuwachs (92) in einer Drehbewegung antreibt, um sich in der Waagerechten und unter dem Bett (91) wiederzufinden, und dass andererseits das Ende der Stütze (97), das sich am Bettzuwachs (92) abstützt, ebenfalls mitgezogen wird und sich gegen das Bett (91) aufgestellt und parallel zur Decke (4) wiederfindet.

10. Ein Campingfahrzeug (2) nach den Ansprüchen 1, 2, 7, 8 und 9, das sich dadurch auszeichnet, dass ein gelenkiges Bett (89) ein Bett (91) überlagert und auf ihm ruht, das mit seinem Bettzuwachs (92) ausgestattet ist, und dass dieses gelenkige Bett (89) ebenfalls einen Bettzuwachs (90) umfasst, unter dem eine Transportrolle (88) befestigt ist, die sich in dem Winkel, der dem Scharnier (93) gegenüber liegt, und nahe an der Platte (57) befindet, und dass die Achse der Transportrolle (88) parallel zur Wand (55) und senkrecht zur Platte (57) ist und dass andererseits, wenn das Bett (91), das vom Bett (89) überragt wird, sich zum unteren Teil des Wavelets (88) hin bewegt, in einer Auflagefläche (87) in Form eines Viertelkreises in Kontakt tritt, deren unterer Teil der Krümmung gegen die Wand (55) liegt und mit dieser fest verbunden ist und dass diese Auflagefläche (87), wenn sie in Kontakt mit dem Wavelet (88) ist, das mit dem Bettüberhang (90) mitgezogen wird, sich in 1 Horizontalen und in der Verlängerung des Bettes (89) am Ende des Laufes befinden könnte und dass gleichzeitig ein Verbindungsmittel (15), das an der Ecke (36) des Bettes (89) befestigt ist, dieses mit dem Verbindungswinkel der Wand (5) mit der Decke (4) und in der Nähe der Platte (57) und dass ein anderes Verbindungsmittel (15), das an der Ecke (39) des Bettes (89) befestigt ist, mit der Verbindung zwischen der Decke (4) und der Wand (55) verbunden ist und in der Nähe der Platte (57) ist, und dass gleichzeitig zwei Keile (41), die an den Enden des Bettes (89) und an der Seite der Platte (57) befestigt sind, sich auf zwei Anschläge (16) legen, die an der Platte (57) befestigt sind, und dass andererseits das gelenkige Bett (91) in seinem Lauf nach unten hin frei ist, und dann, wenn das Bett (91) und sein Bettzuwachs (92) wieder zur Decke (4) aufsteigt, das obere Teil des Bettes (91) mit der Unterseite des Bettes (89) in Kontakt tritt, wird dieses angehoben und das Wavelet (88) rollt gegen die Auflagefläche (87), um sich von dieser zu befreien, und der Bettzuwachs (90) richtet sich nach unten und dass andererseits der Bettzuwachs (90) in seinem oberen Teil und in dem Ende, das dem Bett (89) gegenüberliegt, ein Wavelet (86) umfasst, dessen Achse parallel zur Wand (55) und senkrecht zur Platte (57) und nahe der Platte (57) ist, und dass die Wand (55) in ihrem oberen Teil eine Auflagefläche (85) umfasst, auf der das Wavelet (86) dann rollt und den Bettzuwachs (90) in eine senkrechte Position in Bezug auf den Boden (3) zieht; wenn das Bett (91) am Ende des Laufs nach oben angelangt und dass andererseits ein Wavelet (98), das am Bettzuwachs (92) des gelenkigen Bettes (91) befestigt ist, und dessen Achse parallel zur Wand (55) und senkrecht zur Platte (57) ist und dass dieses Wavelet (98) sich stützt gegen die Unterseite des Bettes (90) und dass während des aufsteigenden Laufs des Bettes (91) die Wavelets (98) den Bettzuwachs (92) unter dem Bett (91) mitzieht und dass gleichzeitig die Stütze (97) sich waagerecht und gegen das Bett (91) anordnet.

11. Ein Campingfahrzeug (2) nach den Ansprüchen 1, 4 und 7, das sich dadurch auszeichnet, dass die ortsfesten Führungen (6) an der Wand (5) befestigt sind und der Neigung und Krümmung der Wand (5) folgen, und zwar in Querrichtung in Bezug auf die Wand (5) und in Bezug auf das Campingfahrzeug (2), und dass in Bezug auf die Längsrichtung die beiden ortsfesten Führungen (6) nach vorne geneigt oder nach hinten im Campingfahrzeug (2) geneigt sind und aufgrund dessen eine doppelte Schrägheit in Bezug auf den Boden (3) und in Bezug auf eine Querebene zur Wand (5) haben und dass die Platte (57) der Neigung, die mit der Längsrichtung verbunden ist, und parallel zu den ortsfesten Führungen (6) folgt.

12. Ein Campingfahrzeug (2) nach den Ansprüchen 1, 2, 4, 5, 7, 8 und 11, das sich dadurch auszeichnet, dass ein Bett (99) ein Bett (1) überlagert, und dass ihre beiden Führungen (5) einer doppelte Quer- und Längsneigung in Bezug auf den Boden (3) und einer Querneigung in Bezug auf die Wand (5) folgen.

13. Ein Campingfahrzeug (2) nach den Ansprüchen 1, 4, 7, 8 und 9, das sich dadurch auszeichnet, dass ein gelenkiges Bett (91) und sein Bettzuwachs (92) angehoben werden können, wobei sie geführt werden durch zwei ortsfeste Führungen (6) mit doppelter Quer- und Längsneigung in Bezug auf den Boden (3) und in Bezug auf eine Ebene, die senkrecht zum Boden (3) und quer in Bezug zur Wand (5) steht, geführt werden.

14. Ein Campingfahrzeug (2) nach den Ansprüchen 1, 2,5, 8, 10, 12 und 13, das sich dadurch auszeichnet, dass ein gelenkiges Bett (89) und sein Bettzuwachs (90) ein gelenkiges Bett (91) mit seinem Bettzuwachs (92) überlagert, die geführt werden in ihrem Aufstieg und Abstieg von zwei ortsfesten Führungen (6) mit doppelter Quer- und Längsneigung in Bezug auf den Boden (3) und in Bezug auf eine Ebene, die senkrecht zum Boden (3) und quer in Bezug zur Wand (5) steht.

15. Ein Campingfahrzeug (2) nach den Ansprüchen 1, 4, 7 und 11, das sich dadurch auszeichnet, dass zwei Betten (1) nebeneinander und gegen die Decke (4) angeordnet sind und quer in Bezug zur Wand (5) und dass vier ortsfeste Führungen (6) an der Wand (6) befestigt sind und der Neigung und Krümmung der Wand (5) folgen und dass die beiden Erstgenannten einem der beiden Betten entsprechen (1) und in Bezug auf den Boden (3) in Längsrichtung im Bezug zur Wand (5) und in einem derartigen Sinne geneigt sind, dass der untere Teil der beiden ortsfesten Führungen (6) sich gegen oder unter dem zweiten Bett (1) wiederfindet und dass umgekehrt der untere Teil der beiden anderen ortsfesten Führungen (6) nur bis zur halben Höhe zwischen der Decke (4) und dem Boden (3) absinkt und dass ihre Neigung in umgekehrter Richtung der Neigung der beiden anderen ortsfesten Führungen (6) ist und derart, dass sich in keinem Moment die ortsfesten Führungen (6) kreuzen könnten und dass andererseits die beiden Betten (1) übereinandergelegt sind oder fast so, wenn sie in Gebrauchsposition abgesenkt sind.

16. Ein Campingfahrzeug (2) nach den Ansprüchen 1, 4, 7, 9, 11 und 13, das sich dadurch auszeichnet, dass zwei gelenkige Betten (91), die um ihren Bettzuwachs (92) verlängert sind und in Bezug auf die Wand (5) quer angeordnet sind, nebeneinander gegen die Decke (4) eingeordnet sind und dass, wenn sie wieder zum Boden (3) hinabgestiegen sind, eines der beiden sich, von seinen beiden ortsfesten Führungen (6) geführt, in Querrichtung in Bezug auf eine Ebene senkrecht zur Wand (5) bewegt und dass umgekehrt das andere gelenkige Bett (91) das mit seinem Bettzuwachs (92) ausgestattet ist, sich geführt von zwei ortsfesten Führungen (6) nach unten bewegt, und zwar schräg in Bezug auf eine senkrechte Ebene, die quer zur Wand (5) ist, und in umgekehrter Richtung der Neigung der beiden anderen ortsfesten Führungen (6) geneigt, die mit dem anderen Bett (91) verbunden sind, und dass, wenn eines der beiden Betten (91) in der Gebrauchsposition auf mittlerer Höhe zwischen der Decke (4) und dem Boden (3) ankommt, und das andere Bett (91) seinen Lauf nach unten beendet, die beiden Betten (91) übereinandergelegt oder beinahe übereinandergelegt sind.

17. Ein Campingfahrzeug (2) nach den Ansprüchen 1, 2, 3, 4, 5, 6, 7, 8, 11, 12 und 15, das sich dadurch auszeichnet, dass die Wände (5) und (55) senkrecht zum Boden (3) sind.

18. Ein Campingfahrzeug (2) nach den Ansprüchen 1 bis 17, das sich dadurch auszeichnet, dass der Motor (27) außerhalb der Zone angebracht ist, die den Betten vorbehalten ist und dass er entweder an der Decke (4) oder an der Wand (5) befestigt ist und dass er ein Untersetzungsgetriebe (26) umfasst, an dessen Abtrieb eine Kabeltrommel (70) befestigt ist, auf der sich ein flexibles Metallkabel (71) einrollt, dessen Ende ein Befestigungsmittel (72) umfasst, an dem die Kabel (7) (8) (9) und (10) befestigt sind, und dass Scheiben (18) an der Decke (4) oder an der Wand (5) befestigt sind, und zwar so, dass die vier Kabel (7) (8) (9) und (10) sich in derselben Richtung entlang der Decke (4) oder entlang der Wand (5) verschieben, wenn sie das oder die Betten (1), (91) oder (89) anheben.

19. Ein Campingfahrzeug (2) nach den Ansprüchen 1 bis 18, das sich dadurch auszeichnet, dass verschiedene Mittel verwendet werden können: Ein Zahnriemen kann die Gliederkette (12) ersetzen; eine Kurbel kann den Motor (27); Riemen können die Kabel (7) (8) (9) und (10) ersetzen, und in diesem Fall mit der Verwendung von angepassten Scheiben.

20. Ein Campingfahrzeug (2) nach den Ansprüchen 1, 2, 3, 5, 6, 8, 10, 12, 14, 17, 18 und 19, das sich dadurch auszeichnet, dass es mindestens eine Überlagerung von drei Betten (1) (99) (91) (89) entweder in Quer- oder in Längsrichtung in Bezug auf die Wand (5) umfasst.
